# EUROPEAN PATENT SPECIFICATION

(11) **EP 2 786 012 B1**
(45) Date of publication and mention of the grant of the patent: **20.09.2017**
(21) Application number: 12805967.2
(22) Date of filing: 29.11.2012
(51) Int. Cl.: F03B 13/20, F03B 13/22

(54) **WAVE ENERGY CONVERTERS WITH ENHANCED TILTING**
WELLENENERGIEWANDLER MIT VERBESSERTER NEIGUNG
CONVERTISSEURS D'ÉNERGIE DES VAGUES PRÉSENTANT UNE INCLINAISON ACCENTUÉE

(30) Priority: 30.11.2011 IE 20110532; 30.11.2011 IE 20110529
(43) Date of publication of application: 08.10.2014
(73) Proprietor: Jospa Limited, Blackrock, Country Dublin (IE)
(72) Inventor: DUFFY, Patrick Joseph, Blackrock County Dublin (IE); FITZSIMONS, Joceyln Raymond, Cork (IE)
(74) Representative: Weldon, Michael James
(86) International application number: PCT/EP2012/073943
(87) International publication number: WO 2013/079585

(56) References cited:
- WO-A1-2007/139396
- WO-A1-2010/015043
- WO-A2-2008/063086
- GB-A- 2 461 792
- GB-A- 2 472 469

## Description

### INTRODUCTION

### Field of the Invention

The invention relates to wave energy converters (WECs).

### Prior Art Discussion

Our prior European published specification no. EP2510225 describes a WEC in which a rigid water inlet ("chuter") pitches with the leading end rising to capture a slug of water from a wave at a tilt to impart kinetic energy to the slug to assist its movement along the chuter.

Other WECs operate on the principle of motion of floats, such as those described in EP1439306 and EP1295031 (Wavebob), WO2011/061546 (Pelamis), and US3928967 (Salter).

GB2472469 (Korea Electric Power Corp) describes a WEC with floating bodies interconnected by pivoted shafts.

WO2007/139396 (Fobox AS) describes a WEC with an immersed vessel.

The invention is directed towards providing improvements in operation of WECs which require a rocking or tilting motion to provide output power.

### SUMMARY OF THE INVENTION

According to the invention, there is provided a wave energy converter as claimed in claim 1.

In one embodiment, there are fins on opposed lateral sides of the element.

In one embodiment, the converter comprises a plurality of inter-linked elements, at least some of which have said tilt means. In one embodiment, each element has a length in the range of 40 m to 60 m.

In another embodiment, the fins are pivotally mounted and the wave energy converter further comprises a controller arranged to lock said fins at desired angles according to a desired pitching motion. In one embodiment, the controller is adapted to direct the fins to a position extending downwardly towards the aft end for maximum pitching, and a position extending downwardly towards the fore end for least pitching.

In one embodiment, the tilt means includes an air pocket device arranged to cause an air pocket to switch positions in accordance with wave motion from the fore end to the aft end and from the aft end to the fore end in a bi-stable manner.

In one embodiment, the air pocket device comprises a flexible air bag located under a waterline of the element.

In another embodiment, the air pocket device is rigid, and the air pocket moves within the device above a volume of liquid. In one embodiment, the air pocket device is an integral part of the element.

In one embodiment, the tilt means comprises a switch adapted to cause an air pocket in the device to switch between leading and trailing positions.

In one embodiment, there is a series of elements and at least two adjacent elements are interconnected by air conduits and the switch is located between elements, and the wave energy converter further comprises a controller adapted to control air flow so that at least two juxtaposed elements tilt together as a single element.

In one embodiment, there are at least three elements interlinked by air conduits and switches, and the controller is adapted to cause at least two adjoining elements to have a combined air pocket.

In one embodiment, at least two elements are inter-linked by a coupler having a prime mover for power output. In one embodiment, the coupler includes pistons in cylinders.

In one embodiment, each end of the element is linked with a prime mover to move the prime mover with upward tilt movement.

In one embodiment, the floating element is a flexible tube arranged to convey slugs of water from the fore end to the aft end.

In another aspect, the invention provides a wave energy converter comprising a floating element linked with a submerged prime mover for power output, wherein the floating element and the prime mover each have a fin arranged with opposed orientations so that water movement at a crest separates the element and the prime mover, and reverse-direction water movement at a trough pulls them together.

In one embodiment, one orientation is downward and rearwardly and another is upward and rearwardly.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a side view diagram showing a WEC of the invention in which tilting of longitudinal elements is increased by an arrangement of fins;
Fig. 2 illustrates principle of operation for tilting movement of a WEC element having fins arranged on a generally horizontal plane at sea level;
Fig. 3 is a series of diagrams illustrating operation of a WEC of the flexible tube type which conveys pockets of compressed air and slugs of water, demonstrating that even with fixed fins all at the same angle relative to the tube, the tube is forced upward at the crests and downward at the troughs, due to the circular motion within waves, where the water molecules move forward with the wave tops and backward with the wave troughs;
Fig. 4 is a series of diagrams showing control of fins for optimum tilting or movement-damping effect, for flow being from left to right;
Fig. 5 shows a further WEC, with fins arranged along a vertical axis for mutually opposed actions in response to wave crests and troughs;
Fig. 6 is a set of views of a WEC of the invention, having flexible air pockets for bi-stable tilting movement; and Fig. 7 is a set of views of a WEC of another embodiment, in which the air pockets have rigid walls;
Fig. 8 is a diagrammatic side view showing another WEC, in this case with air passing from one element to another;
Fig. 9 shows a WEC which has flexible-walled air pockets and is generally cylindrical in configuration;
Fig. 10 shows a further WEC of the invention in which each end of a floating element directly pulls a prime mover, with upward tilt; and
Figs. 11 and 12 are plots illustrating results of the invention in some embodiments.

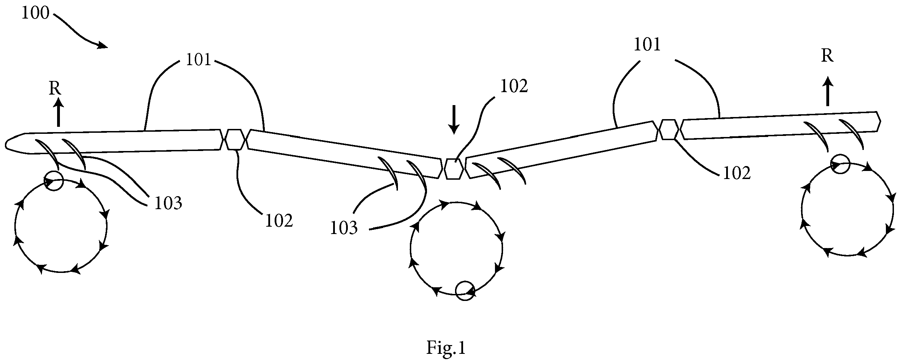

In various embodiments WECs of the invention have wave floating elements which include fixed fins along the fore-aft direction for assisting useful motion. These are in addition to or instead of other aspects such as air pockets described below. Referring to Fig. 1, a WEC 100 has a series of elements 101 linked by couplers 102. The couplers may for example be of the type described in WO2011/061546 (Pelamis). Each element 101 comprises fins 103, extending rearwardly and downwardly from the fore end to the aft end.

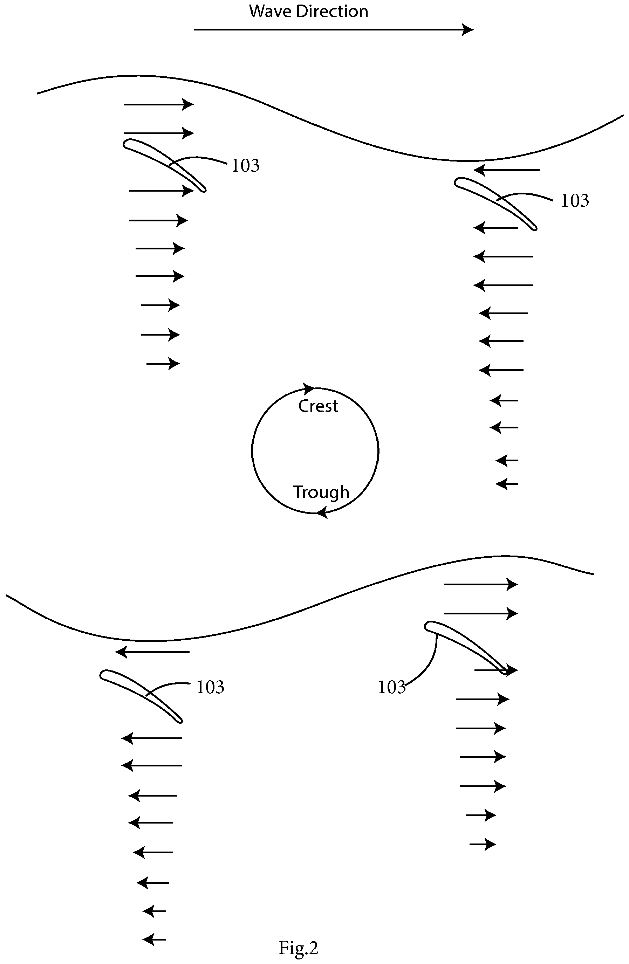

The principle is shown in Fig. 2. The different water-circulation directions for wave crests and troughs gives the exaggerated tilt effect for both ends of the floating element. A leading fin 103 is pushed up by a crest while the trailing fin 103 is pulled down. It is the opposite as a trough passes, as shown by the bottom diagram. It is preferred that the distance between the leading and trailing fins of a particular element be about half a wavelength typically about 40 m to about 80m for most ocean applications. However, shorter elements may be used with suitable control of fin angle.

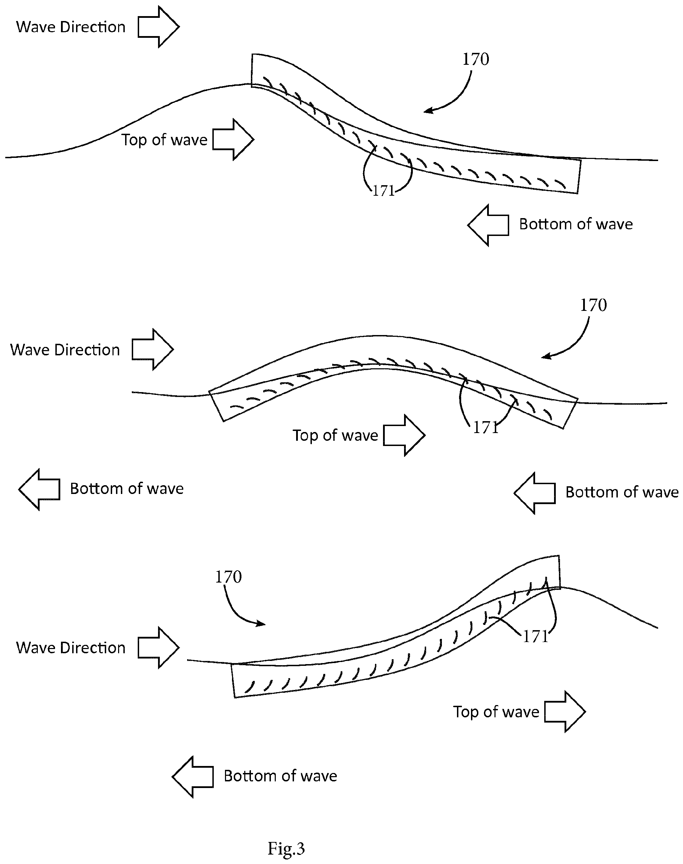

Fig. 3 shows how a hollow flexible tube element 170 of a WEC can have exaggerated elevation at the wave crests and sink deeper at the wave hollows by virtue of fins 171. In this case the WEC tube 170 is of the type described in our prior European published specification no. EP2307705. The fins 171 take advantage of the circular motion of the water in the waves to provide an exaggerated sink-float effect.

For both the embodiments of Figs. 1 and 3 at the wave crests the water particles are moving forward, due to the circular motion within waves, and push the already raised fin higher. Then, when a wave hollow passes the same fin 171 the water particles are moving backward and act on the opposite surface of the fin, pushing it deeper. So, with a rigid fixed fin the upward motion is exaggerated at wave crests and the downward motion is exaggerated downwards at wave hollows.

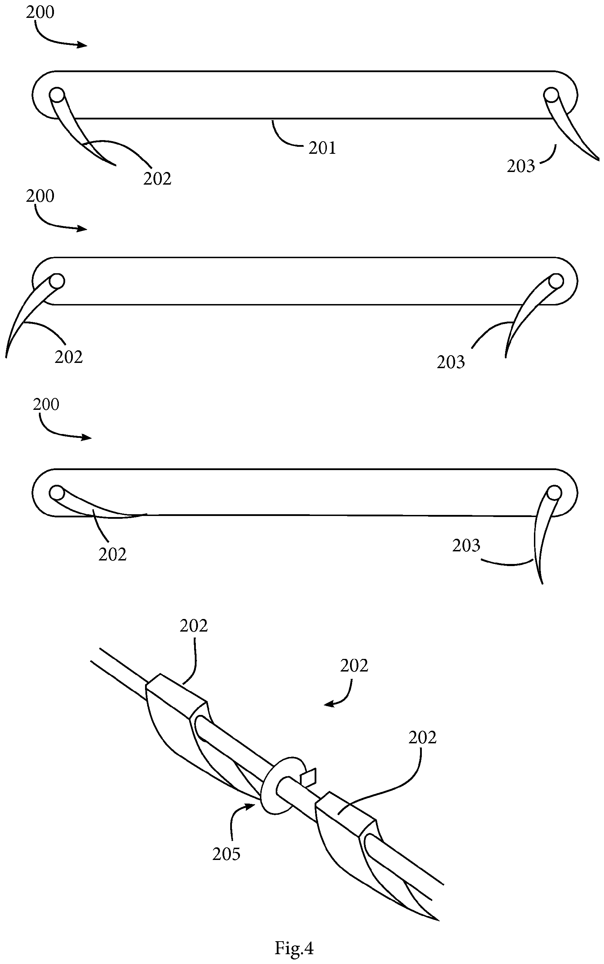

Referring to Fig. 4 a floating element 200 has a rigid body 201 with a leading fin 202 and a trailing fin 203. Each has two fin blades spaced apart by a central shaft with a disc-brake 205. A control mechanism is arranged to set optimum positions as follows:
- top diagram, fins downward and rearward for maximum pitching,
- middle diagram, find downward and forward for least pitching, and
   bottom diagram, a particular setting for each pair of fins to achieve the desired effect.

In the various embodiments above there are multiple fins and they are arranged for acting in opposed manners to provide increased lifting and lowering where desired.

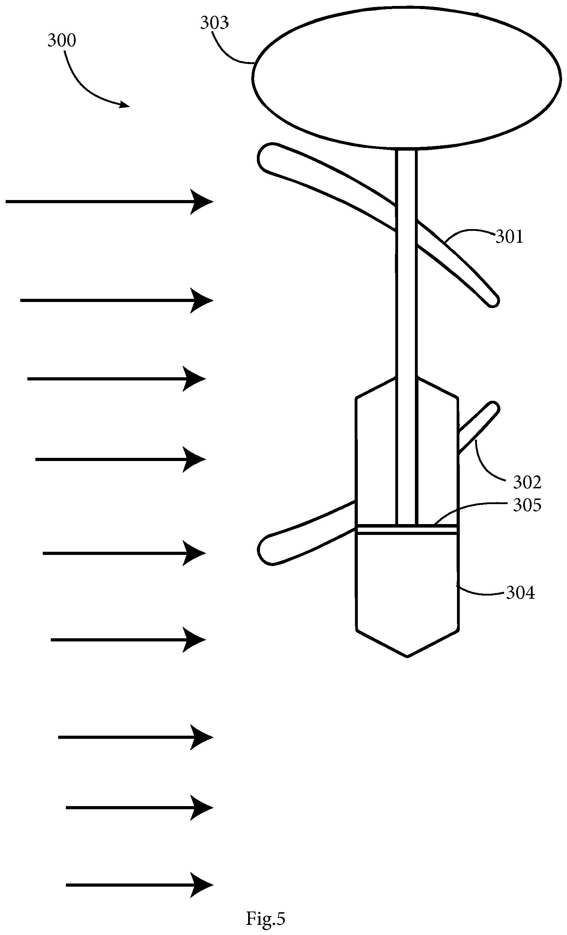

Referring to Fig. 5 a WEC 300 has upper and lower fins 301 and 302 arranged one above the other. Again, these act in opposing manners in order to increase separation of a buoy 303 and a prime mover 304 due to wave motion. At a wave crest the separation is increased, thereby pushing the piston 305 down. At a trough the water impacts on the convex fin surfaces, thereby pushing them together, again imparting relative motion.

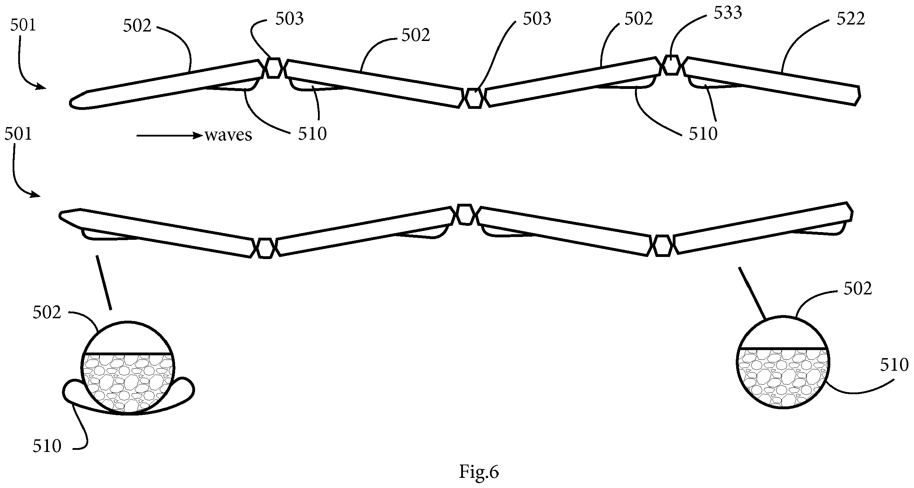

Referring to Fig. 6 a WEC 50 comprises a series of elements 502 connected by links 503 which may be of the Pelamis™ type (WO2011/061546). In addition, however, there is an air pocket device 510 under each element. The device 510 is in the form of a flexible bag which allows an air pocket to move quickly to the front, facing an on-coming wave because air naturally rises. Importantly the air pocket is below the water line. This causes a toggle-like action, in which the air pocket switches from the fore position to the aft position in a discrete bi-stable manner. Presence of the air pocket at either end exaggerates the extent to which that end is elevated, thus increasing the useful movement causing energy, in this case movement of hydraulic cylinders in the joints 503. The action is bi-stable, and the bi-stable states (501) and (503) may be at different energy levels.

Where the tilt means causes bi-stable or flip-flop movement there are only two stable states. The energy required to change from state A to a state B may be different from that required to change from the state B to the state A. The floating element may be configured so that it requires a big wave to flip from A to B and a small wave to flip from B to A. This configuration may be achieved by the manner in which the ends of the element are connected to a prime mover. It may alternatively be achieved by the air pocket enclosure being narrower at one end than the other. Another configuration may be the extent of permitted travel of air in the longitudinal direction along the element.

The greater the volume of air for switching positions, the greater is the pitching enhancement. However, the air volume should not be so great that it raises the element above mean water level.

It should be borne in mind that the switching of air as described is very different from movement "sloshing" of water. Air tends to move very quickly to a higher level, which is a mechanism very different from water movement. Moreover, such air movement would dissipate much less energy than water would. Air will always migrate quickly to the high end, regardless of whether that be fore or aft. What is elevated will be pushed higher.

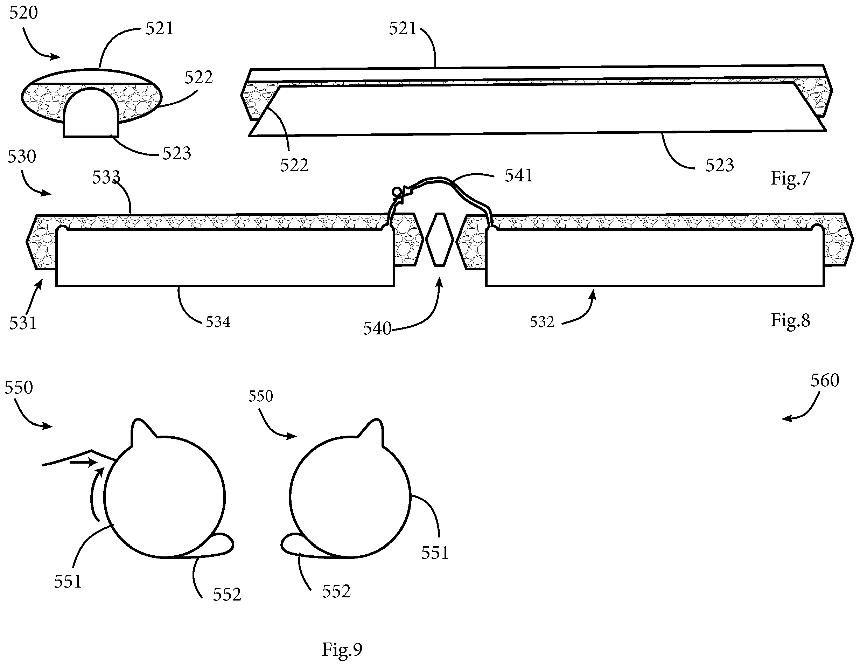

Fig. 7 shows a single element 520 of a WEC of another embodiment. The element 520 has a body 522 on top of which there is buoyancy 521, which is required for operation. In addition, however, there is an inverted U-shaped rigid air pocket device 523, in which a certain volume of air is retained above the water. Provided the air pocket is retained at a sufficient size in the device in the enclosure 523 then it will switch back and forth in this toggle-like manner. In this embodiment the container of the air pocket is open at the bottom, the air pocket being retained by the seal provided by the water around the bottom rim of the container 532. In another embodiment, the rigid container is closed.

A variation of this embodiment is also shown in Fig. 8, in which a series of two elements is indicated by the numeral 530. The elements 531 and 532 have bodies 533 and are linked by a joint 540 across which there is a flexible air pipe 541. There is a butterfly valve on this flexible pipe 541. When it is open air can travel from the element 531 to the element 532 and back. So, the two elements toggle like a single element, with all or most of the air moving to one or other element. Whereas in the WEC element 520 one end is either in the up or down stability zones, in Fig. 8 the two elements act like one long version of the WEC element 520 with one tank higher than the other. This feature can be used to better 'tune' to longer wavelengths. In other embodiments a number of elements may be connected in this way so that air from any tank can be sent to any other, so that a control system could give real time wave tuning, which is a very desirable feature.

It will be appreciated that the embodiment of Fig. 8 may be expanded so that there is a series of three or more interconnected elements. By inter-connecting the air pockets of the elements some or all may be joined to form a logical single element as desired. This allows tuning to wave conditions. For example if there are four interlinked elements the first two could be joined to aggregate the air pocket size for fore elevation, and the last two may be joined to aggregate the aft air pocket size for aft tilting.

Referring to Fig. 9 a WEC 550 comprises a Salter Duck™-like buoy 551, having a flexible air pocket device 552. This toggles back and forth between the leading and trailing positions, again to exaggerate the motion causing useful energy.

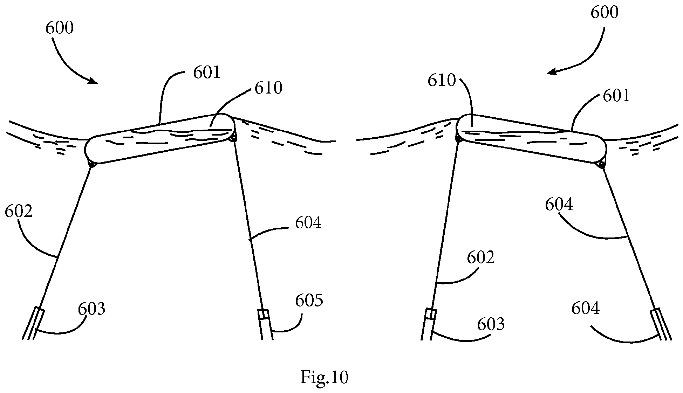

Referring to Fig. 10, another WEC 600 comprises a floating element 601 which is linked at both its fore and aft ends by mooring ropes 602 and 604 to piston/cylinder prime movers 603 and 605. Buoyancy is provided for each element 601 by an air pocket 610 in a hollow body containing water. The pitching action is enhanced by the fact that the air pocket 611 is sized to move quickly from one end to the other, and does not encompass the full length. The left hand diagram of Fig. 10 shows one bi-stable position, while the right hand diagram shows the other bi-stable position.

Any of the WEC elements of Figs. 6 to 11 may include fins of the embodiment of Figs. 1 to 4 for further increased pitching motion.

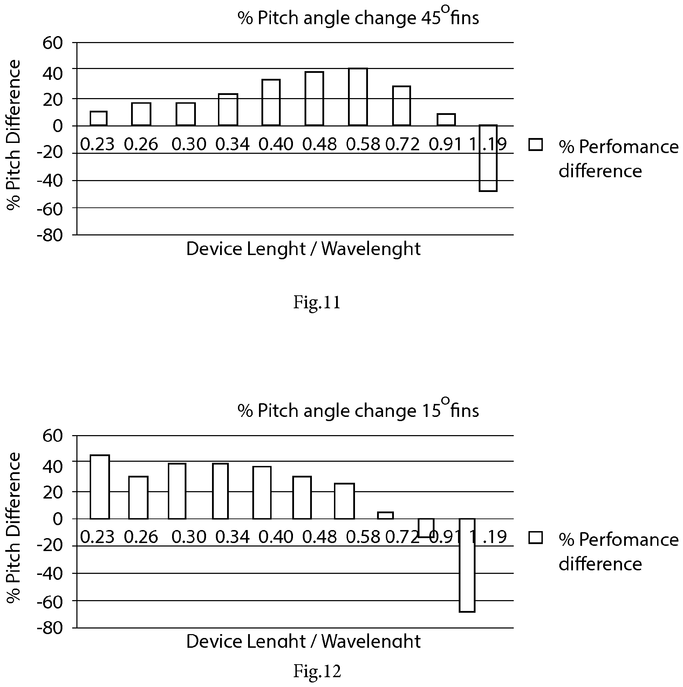

It will be appreciated that the invention provides for exaggerated tilting of floating elements in order to increase efficiency of capture of energy from the waves. Fig. 11 shows the results of laboratory tests for floating elements with leading and trailing fins at 45° rearward and downward. There is a pitch angle increase of close to 40% for a device length/wavelength value of about 0.5. If the fin angle is only 15° to horizontal then such an improvement can also be achieved provided the expected wavelength does not go below a level at which the device length/wavelength value is above 0.6. Therefore, for any given device length (fore-aft distance between fins), choice of fin angle is dependent on expected wavelengths.

The invention is not limited to the embodiments described but may be varied in construction and detail.

## Claims

1. A wave energy converter (100) comprising:
at least one floating element (101) having buoyancy to pitch up and down with wave movement,
a connector for linking the element to a prime mover (102), and
a tilt means (102) to enhance tilting motion of a fore element end upwards with a wave crest and an aft element end downward with a wave trough,
**characterized in that**:
the tilt means comprises a plurality of fins (102) mounted at different fore-aft positions on the element (101), each fin being arranged in a configuration extending from the fore end downwardly towards the aft end.

2. A wave energy converter as claimed in claim 1, wherein there are fins (103) on opposed lateral sides of the element.

3. A wave energy converter as claimed in any preceding claim, wherein the converter comprises a plurality of inter-linked elements (101), at least some of which have said tilt means.

4. A wave energy converter as claimed in any preceding claim, wherein each element has a length in the range of 40 m to 60 m.

5. A wave energy converter as claimed in any preceding claim, wherein the fins (202) are pivotally mounted and the wave energy converter further comprises a controller arranged to lock (205) said fins at desired angles according to a desired pitching motion.

6. A wave energy converter as claimed in claim 5, wherein the controller is adapted to direct the fins to a position extending downwardly towards the aft end for maximum pitching, and a position extending downwardly towards the fore end for least pitching.

7. A wave energy converter as claimed in any preceding claim, wherein the tilt means includes an air pocket device (510) arranged to cause an air pocket to switch positions in accordance with wave motion from the fore end to the aft end and from the aft end to the fore end in a bi-stable manner, and wherein the air pocket device comprises a flexible air bag (510) located under a waterline of the element.

8. A wave energy converter as claimed in claim 7, wherein the tilt means comprises a switch (541) adapted to cause an air pocket in the device to switch between leading and trailing positions.

9. A wave energy converter as claimed in claim 8, wherein there is a series of elements and at least two adjacent elements are interconnected by air conduits (541) and the switch is located between elements, and the wave energy converter further comprises a controller adapted to control air flow so that at least two juxtaposed elements tilt together as a single element.

10. A wave energy converter as claimed in claim 9, wherein there are at least three elements interlinked by air conduits and switches, and the controller is adapted to cause at lest two adjoining elements to have a combined air pocket.

11. A wave energy converter as claimed in any preceding claim, wherein at least two elements are inter-linked by a coupler (503) having a prime mover for power output, and wherein the coupler (503) includes pistons in cylinders.

12. A wave energy converter as claimed in any of claims 1 to 11, wherein each end of the element (601) is linked with a prime mover (603, 605) to move the prime mover with upward tilt movement.

13. A wave energy converter as claimed in any of claims 1 to 6, wherein the floating element is a flexible tube (170) arranged to convey slugs of water from the fore end to the aft end.

14. A wave energy converter comprising a floating element (303) linked with a submerged prime mover (304, 305) for power output, wherein the floating element and the prime mover each have a fin (301, 302) arranged with opposed orientations so that water movement at a crest separates the element and the prime mover, and reverse-direction water movement at a trough pulls them together.

15. A wave energy converter as claimed in claim 14, wherein one orientation is downward and rearwardly and another is upward and rearwardly.

## Patentansprüche

1. Wellenenergiewandler (100), der Folgendes umfasst:
mindestens ein Schwimmelement (101), das Auftrieb aufweist, um mit einer Wellenbewegung auf- und abzusteigen,
einen Verbinder zum Verbinden des Elements mit einer Antriebsmaschine (102) und
ein Kippmittel (102) zur Verbesserung der Kippbewegung eines vorderen Elementendes nach oben mit einem Wellenberg und eines hinteren Elementendes nach unten mit einem Wellentrog,
**dadurch gekennzeichnet, dass**:
das Kippmittel eine Vielzahl von Rippen (102) umfasst, die an verschiedenen Positionen in Längsrichtung an dem Element (101) angebracht sind, wobei jede Rippe in einer Konfiguration angeordnet ist, die sich von dem vorderen Ende nach unten in Richtung des hinteren Endes erstreckt.

2. Wellenenergiewandler nach Anspruch 1, wobei an gegenüberliegenden lateralen Seiten des Elements Rippen (103) vorgesehen sind.

3. Wellenenergiewandler nach einem der vorhergehenden Ansprüche, wobei der Wandler mehrere miteinander verbundene Elemente (101) umfasst, von denen mindestens einige das Kippmittel aufweisen.

4. Wellenenergiewandler nach einem der vorhergehenden Ansprüche, wobei jedes Element eine Länge im Bereich von 40 m bis 60 m aufweist.

5. Wellenenergiewandler nach einem der vorhergehenden Ansprüche, wobei die Rippen (202) schwenkbar angebracht sind und der Wellenenergiewandler ferner einen Regler aufweist, der dafür angeordnet ist, die Rippen in gewünschten Winkeln entsprechend einer gewünschten Nickbewegung zu verriegeln (205).

6. Wellenenergiewandler nach Anspruch 5, wobei der Regler dafür ausgelegt ist, die Rippen in eine Position zu leiten, die sich nach unten zum hinteren Ende hin erstreckt, um eine maximale Neigung zu erreichen, und die Rippen in eine Position zu leiten, die sich nach unten zum vorderen Ende hin erstreckt, um eine minimale Neigung zu erreichen.

7. Wellenenergiewandler nach einem der vorhergehenden Ansprüche, wobei das Kippmittel eine Lufttaschenvorrichtung (510) umfasst, die dafür angeordnet ist, eine Lufttasche zu veranlassen, Positionen gemäß der Wellenbewegung von dem vorderen Ende zu dem hinteren Ende und von dem hinteren Ende zu dem vorderen Ende in einer bi-stabilen Weise zu wechseln, und wobei die Lufttaschenvorrichtung einen flexiblen Luftbeutel (510) umfasst, der unter einer Wasserlinie des Elements angeordnet ist.

8. Wellenenergiewandler nach Anspruch 7, wobei das Kippmittel einen Schalter (541) umfasst, der dafür ausgelegt ist, eine Lufttasche in der Vorrichtung zu veranlassen, zwischen vorderen und hinteren Positionen zu wechseln.

9. Wellenenergiewandler nach Anspruch 8, wobei eine Reihe von Elementen vorhanden ist und mindestens zwei benachbarte Elemente durch Luftleitungen (541) miteinander verbunden sind und der Schalter zwischen Elementen angeordnet ist und der Wellenenergiewandler ferner einen Regler umfasst, der dafür ausgelegt ist, den Luftstrom zu regeln, so dass mindestens zwei nebeneinander liegende Elemente als ein einziges Element kippen.

10. Wellenenergiewandler nach Anspruch 9, wobei mindestens drei Elemente vorhanden sind, die durch Luftkanäle und Schalter miteinander verbunden sind, und der Regler so ausgelegt ist, dass er mindestens zwei benachbarte Elemente veranlasst, eine kombinierte Lufttasche aufzuweisen.

11. Wellenenergiewandler nach einem der vorhergehenden Ansprüche, wobei mindestens zwei Elemente durch einen Koppler (503) miteinander verbunden sind, der eine Antriebsmaschine zur Leistungsabgabe aufweist, und wobei der Koppler (503) Kolben in Zylindern umfasst.

12. Wellenenergiewandler nach einem der Ansprüche 1 bis 11, wobei jedes Ende des Elements (601) mit einer Antriebsmaschine (603, 605) verbunden ist, um die Antriebsmaschine mit einer Aufwärtskippbewegung zu bewegen.

13. Wellenenergiewandler nach einem der Ansprüche 1 bis 6, wobei das Schwimmelement ein flexibles Rohr (170) ist, das dafür angeordnet ist, Wasserstöße von dem vorderen Ende zu dem hinteren Ende zu befördern.

14. Wellenenergiewandler, der ein Schwimmelement (303) umfasst, das mit einer untergetauchten Antriebsmaschine (304, 305) zur Leistungsabgabe verbunden ist, wobei das Schwimmelement und die Antriebsmaschine jeweils eine Rippe (301, 302) aufweisen, die in entgegengesetzten Ausrichtungen angeordnet ist, so dass eine Wasserbewegung an einem Wellenberg das Element und den Primärantrieb trennt und die Wasserbewegung in Rückwärtsrichtung in einem Trog sie zusammenzieht.

15. Wellenenergiewandler nach Anspruch 14, wobei eine Orientierung nach unten und nach hinten ausgerichtet ist und eine andere nach oben und nach hinten ausgerichtet ist.

## Revendications

1. Convertisseur d'énergie des vagues (100) comportant :
au moins un élément flottant (101) ayant une flottabilité à des fins de tangage vers le haut et vers le bas en fonction du mouvement de la vague,
un connecteur servant à relier l'élément à un moteur d'entraînement (102), et
un moyen d'inclinaison (102) servant à accroître le mouvement d'inclinaison d'une extrémité avant de l'élément vers le haut avec une crête de la vague et d'une extrémité arrière de l'élément vers le bas avec un creux de la vague,
**caractérisé en ce que** :
le moyen d'inclinaison comporte une pluralité d'ailettes (102) montées au niveau de différentes positions avant-arrière sur l'élément (101), chaque ailette étant agencée selon une configuration s'étendant depuis l'extrémité avant vers le bas en direction de l'extrémité arrière.

2. Convertisseur d'énergie des vagues selon la revendication 1, dans lequel il y a des ailettes (103) sur des côtés latéraux opposés de l'élément.

3. Convertisseur d'énergie des vagues selon l'une quelconque des revendications précédentes, dans lequel le convertisseur comporte une pluralité d'éléments reliés mutuellement (101), dont au moins certains d'entre eux ont ledit moyen d'inclinaison.

4. Convertisseur d'énergie des vagues selon l'une quelconque des revendications précédentes, dans lequel chaque élément a une longueur se trouvant dans la plage allant de 40 m à 60 m.

5. Convertisseur d'énergie des vagues selon l'une quelconque des revendications précédentes, dans lequel les ailettes (202) sont montées de manière pivotante et le convertisseur d'énergie des vagues comporte par ailleurs un dispositif de commande agencé pour verrouiller (205) lesdites ailettes selon des angles souhaités en fonction d'un mouvement de tangage souhaité.

6. Convertisseur d'énergie des vagues selon la revendication 5, dans lequel le dispositif de commande est adapté pour diriger les ailettes jusque sur une position s'étendant vers le bas en direction de l'extrémité arrière pour un tangage maximum et une position s'étendant vers le bas en direction de l'extrémité avant pour un moindre tangage.

7. Convertisseur d'énergie des vagues selon l'une quelconque des revendications précédentes, dans lequel le moyen d'inclinaison comprend un dispositif à poches d'air (510) agencé pour amener une poche d'air à changer de positions en fonction du mouvement de la vague depuis l'extrémité avant jusque sur l'extrémité arrière et depuis l'extrémité arrière jusque sur l'extrémité avant d'une manière bistable, et dans lequel le dispositif à poches d'air comporte un sac d'air flexible (510) situé sous une ligne de flottaison de l'élément.

8. Convertisseur d'énergie des vagues selon la revendication 7, dans lequel le moyen d'inclinaison comporte un commutateur (541) adapté pour amener une poche d'air dans le dispositif à changer entre des positions avant et arrière.

9. Convertisseur d'énergie des vagues selon la revendication 8, dans lequel il y a une série d'éléments et au moins deux éléments adjacents sont interconnectés par des conduits d'air (541) et le commutateur est situé entre des éléments, et le convertisseur d'énergie des vagues comporte par ailleurs un dispositif de commande adapté pour commander l'écoulement de l'air de telle sorte qu'au moins deux éléments juxtaposés s'inclinent ensemble comme un seul élément.

10. Convertisseur d'énergie des vagues selon la revendication 9, dans lequel il y a au moins trois éléments reliés mutuellement par des conduits d'air et des commutateurs, et le dispositif de commande est adapté pour amener au moins deux éléments contigus à avoir une poche d'air combinée.

11. Convertisseur d'énergie des vagues selon l'une quelconque des revendications précédentes, dans lequel au moins deux éléments sont reliés mutuellement par un dispositif d'accouplement (503) ayant un moteur d'entraînement à des fins de sortie de puissance, et dans lequel le dispositif d'accouplement (503) comprend des pistons dans des cylindres.

12. Convertisseur d'énergie des vagues selon l'une quelconque des revendications 1 à 11, dans lequel chaque extrémité de l'élément (601) est reliée à un moteur d'entraînement (603, 605) pour déplacer le moteur d'entraînement avec le mouvement d'inclinaison vers le haut.

13. Convertisseur d'énergie des vagues selon l'une quelconque des revendications 1 à 6, dans lequel l'élément flottant est un tube flexible (170) agencé pour transporter des masses d'eau depuis l'extrémité avant jusqu'à l'extrémité arrière.

14. Convertisseur d'énergie des vagues comportant un élément flottant (303) relié à un moteur d'entraînement submergé (304, 305) à des fins de sortie de puissance, dans lequel l'élément flottant et le moteur d'entraînement ont chacun une ailette (301, 302) agencée selon des orientations opposées de telle sorte que le mouvement de l'eau au niveau d'une crête sépare l'élément et le moteur d'entraînement, et le mouvement de l'eau dans une direction inverse au niveau d'un creux les rapproche.

15. Convertisseur d'énergie des vagues selon la revendication 14, dans lequel une orientation est vers le bas et vers l'arrière et l'autre est vers le haut et vers l'arrière.
